# EUROPÄISCHE PATENTSCHRIFT

(11) **EP 3 443 026 B1**
(45) Veröffentlichungstag und Bekanntmachung des Hinweises auf die Patenterteilung: **26.06.2019**
(21) Anmeldenummer: 17718851.3
(22) Anmeldetag: 07.04.2017
(51) Int. Cl.: C08G 77/26

(54) **VERFAHREN ZUR HERSTELLUNG VON OXAMID-FUNKTIONELLEN SILOXANEN**
PROCESS FOR PRODUCING OXAMIDE-FUNCTIONAL SILOXANES
PROCÉDÉ DE PRÉPARATION DE SILOXANES À FONCTION OXAMIDE

(43) Veröffentlichungstag der Anmeldung: 20.02.2019
(73) Patentinhaber: Wacker Chemie AG, 81737 München (DE)
(72) Erfinder: SCHÄFER, Oliver, 84489 Burghausen (DE); GRATZL, Petra, 84577 Tüßling (DE)
(74) Vertreter: Budczinski, Angelika
(86) Internationale Anmeldenummer: PCT/EP2017/058414
(87) Internationale Veröffentlichungsnummer: WO 2018/184695

(56) Entgegenhaltungen:
- WO-A1-2010/077477
- WO-A2-2011/090644
- US-A1- 2007 149 745

## Beschreibung

Die Erfindung betrifft ein Verfahren zur Herstellung von Oxamid-funktionellen Siloxanen.

Oxamid-funktionelle Polysiloxane sind in vielen Anwendungsbereichen brauchbar v.a. jedoch zur Herstellung von Blockcopolymeren von thermoplastischen Siloxanen wie sie z.B. in EP-A 1 963 404 beschrieben werden. Grundsätzlich bekannt und beschrieben ist die Herstellung solcher Oxamid-funktionellen Siloxane in US-A 2007/0149745. Hierbei werden als Ausgangsprodukte Bisaminoalkyl-funktionelle Siloxane verwendet, die über verschiedene Methoden hergestellt werden können. Diese Bisaminoalkyl-funktionellen Siloxane werden bevorzugt mit im Überschuss vorhandenen Dialkyloxalaten zu gewünschten substituierten amino-oxo-acetat-funktionellen Siloxanen umgesetzt, vereinfacht im Nachfolgenden Oxamid-funktionelle Siloxane genannt. Der Überschuss an in der Reaktionsmischung vorhandenen Dialkyloxalaten muss dabei zur weiteren Umsetzung dieser Produkte in der Regel ebenfalls entfernt werden, was hier v.a. durch eine Vakuumdestillation geschieht. Nachteilig an dem beschriebenen Verfahren sind nun einige Dinge. So hängt der Funktionalisierungsgrad der Oxamid-funktionellen Siloxane in erster Linie vom Funktionalisierungsgrad der als Ausgangsstoff verwendeten Bisaminoalkyl-siloxane ab, die aber nur mit größerem Aufwand mit einer Funktionalität > 99 % hergestellt werden können. Weiterhin ist es zur Vermeidung von Nebenreaktionen nötig, die zugesetzten Dialkyloxalate in relativ großen Überschüssen einzusetzen, was wiederum eine aufwändige und teure Entfernung der nicht abreagierten Dialkyloxalat-Anteile nach sich zieht, da diese z.T giftig sind. Ein dritter wesentlicher Nachteil ist die Tatsache, dass kommerziell erhältliche Dialkyloxalate wie z.B. Diethyloxalat, auch Verunreinigungen enthalten, die bei der Umsetzung mit Bisamino-funktionellen Siloxanen zu teilweise sehr stark gefärbten Produkten führen, die in einem weiteren Schritt aufwändig entfärbt werden müssen, wenn die weitere Verwendung optisch klare und farblose Produkte erfordert. Ein weiterer Nachteil besteht darin, dass bei der Herstellung hochmolekularer Oxamid-funktioneller Siloxane die entsprechend hochmolekularen Aminosilikon-Vorstufen verwendet werden müssen, deren hohe Viskosität v.a. bei der Befüllung der Reaktoren zu langen Befüll- und damit Stillstandzeiten führt, was die Herstellung dieser Produkte unnötig verteuert. Ebenso ist zur Herstellung von Oxamid-funktionellen Siloxanen verschiedener Kettenlängen die Verfügbarkeit entsprechender Aminosiloxan-Vorstufen verpflichtend.

Es wurde daher nach einem einfachen Weg gesucht, Oxamid-funktionelle Polydimethylsiloxane hoher Reinheit, mit einem hohen Funktionalisierungsgrad in einem möglichst einfachen und schnellen Verfahren zu erhalten.

Überraschenderweise wurde nun gefunden, dass trotz der Gegenwart chemisch reaktiver Gruppen wie Amid- und Estergruppen die gewünschten oxamidfunktionellen Polydimethylsiloxane mittels einer sauer oder basisch katalysierten Equilibrierungsreaktion hergestellt werden konnten, bei der nur geringste Mengen an Katalysatoren ausreichend sind, die Äquilibrierungsreaktion zu katalysieren.

Gegenstand der Erfindung ist ein Verfahren zur Herstellung von amino-oxo-acetat-funktionellen Organosiloxanen durch Umsetzung von
(A) Siloxanen der allgemeinen Formel (I) 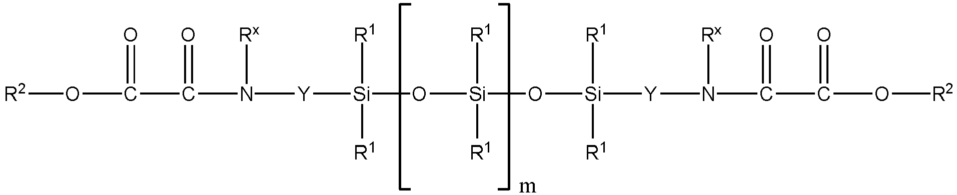 mit
(B) Siloxanen ausgewählt aus
   (B1) linearen Siloxanen der allgemeinen Formel

      HO[SiR₂O]ₜH (II)

      und
   (B2) cyclischen Verbindungen der allgemeinen Formel

   (SiR⁴₂O)ₛ (III),

   wobei
   **R** gleich oder verschieden sein kann und Wasserstoffatom oder einwertige, gegebenenfalls substituierte, SiC-gebundene Kohlenwasserstoffreste bedeutet, welche durch Heteroatome, bevorzugt Sauerstoffatom, unterbrochen sein können,
   **R¹** gleich oder verschieden sein kann und einwertige, gegebenenfalls substituierte, SiC-gebundene Kohlenwasserstoffreste bedeutet, welche durch Heteroatome, bevorzugt Sauerstoffatom, unterbrochen sein können,
   **Y** gleich oder verschieden sein kann und zweiwertige, gegebenenfalls substituierte Kohlenwasserstoffreste darstellt, die durch Sauerstoffatome unterbrochen sein können,
   **R²** gleich oder verschieden sein kann und Wasserstoffatom, monovalente, gegebenenfalls substituierte Kohlenwasserstoffreste bedeutet, die durch Sauerstoffatome unterbrochen sein können,
   **R⁴** gleich oder verschieden sein kann und Wasserstoffatom, Si-gebundenes Halogenatom, Si-gebundene Hydroxygruppe oder einwertige, gegebenenfalls substituierte, SiC-gebundene Kohlenwasserstoffreste bedeutet, welche durch Heteroatome, bevorzugt Sauerstoffatom, unterbrochen sein können,
   **R^{x}** gleich oder verschieden sein kann und Wasserstoffatom oder gegebenenfalls substituierte Kohlenwasserstoffreste bedeutet,
   m 0 oder eine ganze Zahl, bevorzugt 0 oder eine ganze Zahl von 1 bis 10, besonders bevorzugt 0, ist,
   s eine ganze Zahl von 3 bis 10, bevorzugt 4 oder 5, ist und
   t eine ganze Zahl größer 1, bevorzugt eine ganze Zahl von 8 bis 150, bedeutet,
   in Gegenwart von
   (C) Katalysatoren.

Beispiele für Kohlenwasserstoffreste R sind Alkylreste wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neoPentyl-, tert.-Pentylrest; Hexylreste wie der n-Hexylrest; Heptylreste wie der n-Heptylrest; Octylreste wie der n-Octylrest und iso-Octylreste wie der 2,2,4-Trimethylpentylrest; Nonylreste wie der n-Nonylrest; Decylreste wie der n-Decylrest; Dodecylreste wie der n-Dodecylrest; Octadecylreste wie der n-Octadecylrest; Cycloalkylreste wie der Cyclopentyl-, Cyclohexyl-, Cycloheptylrest und Methylcyclohexylreste; Alkenylreste wie der Vinyl-, 1-Propenyl- und der 2-Propenylrest; Arylreste wie der Phenyl-, Naphthyl-, Anthryl- und Phenanthrylrest; Alkarylreste wie o-, m-, p-Tolylreste; Xylylreste und Ethylphenylreste; oder Aralkylreste wie der Benzylrest oder der α- und der β-Phenylethylrest.

Beispiele für substituierte Kohlenwasserstoffreste R sind halogenierte Kohlenwasserstoffreste, wie der Chlormethyl-, 3-Chlorpropyl-, 3-Brompropyl-, 3,3,3-Trifluorpropyl- und 5,5,5,4,4,3,3-Heptafluorpentylrest, sowie der Chlorphenylrest; Hydroxyalkylreste, wie der Hydroxypropylrest; oder Epoxidreste wie der Glycidyloxypropylrest.

Vorzugsweise bedeutet Rest R einen einwertigen, gegebenenfalls mit Halogenatomen oder Hydroxygruppen substituierten Kohlenwasserstoffrest mit 1 bis 20 Kohlenstoffatomen, besonders bevorzugt einen Kohlenwasserstoffrest mit 1 bis 6 Kohlenstoffatomen, insbesondere einen aliphatischen Kohlenwasserstoffrest mit 1 bis 6 Kohlenstoffatomen, besonders bevorzugt den Methyl-, Ethyl- oder Propylrest, insbesondere den Methylrest.

Beispiele für Rest R¹ sind die für Rest R angegebenen Reste.

Bevorzugt handelt es sich bei Rest R¹ um gegebenenfalls mit Halogenatomen oder Hydroxygruppen substituierte, SiC-gebundene Kohlenwasserstoffreste mit 1 bis 20 Kohlenstoffatomen, besonders bevorzugt einen Kohlenwasserstoffrest mit 1 bis 6 Kohlenstoffatomen, insbesondere einen aliphatischen Kohlenwasserstoffrest mit 1 bis 6 Kohlenstoffatomen, insbesondere den Methyl-, Ethyl- oder Propylrest, ganz besonders bevorzugt den Methylrest.

Beispiele für Rest R² sind die für den Rest R angegebenen Reste sowie über Kohlenstoffatom gebundene Polyalkylenglykolreste.

Bevorzugt handelt es sich bei Rest R² um Kohlenwasserstoffreste, besonders bevorzugt um Kohlenwasserstoffreste mit 1 bis 6 Kohlenstoffatomen, insbesondere um den Methyl-, Ethyl- oder Propylrest.

Beispiele für Rest R⁴ sind die für den Rest R angegebenen Reste.

Vorzugsweise handelt es sich bei Rest R⁴ um gegebenenfalls mit Halogenatomen oder Hydroxygruppen substituierte, SiC-gebundene Kohlenwasserstoffreste mit 1 bis 20 Kohlenstoffatomen, besonders bevorzugt um einen Kohlenwasserstoffrest mit 1 bis 6 Kohlenstoffatomen, insbesondere um einen aliphatischen Kohlenwasserstoffrest mit 1 bis 6 Kohlenstoffatomen, insbesondere um den Methyl-, Ethyl- oder Propylrest, ganz besonders bevorzugt um den Methylrest.

Herstellungsbedingt kann Rest R⁴ auch die Bedeutung von Sigebundenen Halogenatomen, bevorzugt Chloratomen, oder Sigebundenen Hydroxyresten haben. Bevorzugt enthalten Siloxane (B2) herstellungsbedingt Reste R⁴ gleich Hydroxygruppen in Mengen von maximal 500 Gew.-ppm, bezogen auf das Gesamtgewicht von Siloxan (B2).

Beispiele für Rest Y sind aliphatisch gesättigte oder ungesättigte, geradkettige oder verzweigte Reste, die mit Halogenatomen substituiert sein können.

Rest Y ist vorzugsweise ein Alkylenrest mit 3 bis 6 Kohlenstoffatomen, der gegebenenfalls substituiert sein kann, insbesondere mit Fluor oder Chlor. Bevorzugt handelt es sich bei Rest Y um einen Propylen- oder Butylenrest, insbesondere um den Propylenrest.

Beispiele für Rest R^{x} sind die für den Rest R angegebenen Reste.

Vorzugsweise handelt es sich bei Rest R^{x} um Wasserstoffatom oder gegebenenfalls mit -CN oder -Halogen substituierte Kohlenwasserstoffreste, bevorzugt um Wasserstoffatom oder Alkylgruppen, besonders bevorzugt um Wasserstoffatom oder lineare Alkylgruppen mit 1 bis 6 Kohlenstoffatomen, insbesondere um Wasserstoffatom, den Methyl- oder Ethylrest, ganz besonders bevorzugt um Wasserstoffatom.

Beispiele für erfindungsgemäß eingesetzte Siloxane (A) sind Et-O-CO-CO-NH-C₃H₆-SiMe₂-[OSiMe₂]₁₀-O-SiMe₂-C₃H₆-NH-CO-CO-O-Et, Me-O-CO-CO-NH-C₃H₆-SiMe₂-[OSiMe₂]₁₀-O-SiMe₂-C₃H₆-NH-CO-CO-O-Et, Me-O-CO-CO-NH-C₃H₆-SiMe₂-[OSiMe₂]₁₀-O-SiMe₂-C₃H₆-NH-CO-CO-O-Me, Et-O-CO-CO-NH-C₃H₆-SiMe₂-[OSiMe₂]₄-O-SiMe₂-C₃H₆-NH-CO-CO-O-Et, Me-O-CO-CO-NH-C₃H₆-SiMe₂-[OSiMe₂]₄-O-SiMe₂-C₃H₆-NH-CO-CO-O-Et, Me-O-CO-CO-NH-C₃H₆-SiMe₂-[OSiMe₂]₄-O-SiMe₂-C₃H₆-NH-CO-CO-O-Me, Et-O-CO-CO-NH-C₃H₆-SiMe₂-[OSiMe₂]₂-O-SiMe₂-C₃H₆-NH-CO-CO-O-Et, Me-O-CO-CO-NH-C₃H₆-SiMe₂-[OSiMe₂]₂-O-SiMe₂-C₃H₆-NH-CO-CO-O-Et, Me-O-CO-CO-NH-C₃H₆-SiMe₂-[OSiMe₂]₂-O-SiMe₂-C₃H₆-NH-CO-CO-O-Me, Et-O-CO-CO-NH-C₃H₆-SiMe₂-O-SiMe₂-C₃H₆- NH-CO-CO-O-Et, Me-O-CO-CO-NH-C₃H₆-SiMe₂-O-SiMe₂-C₃H₆- NH-CO-CO-O-Et und Me-O-CO-CO-NH-C₃H₆-SiMe₂-O-SiMe₂-C₃H₆- NH-CO-CO-O-Me, wobei Me Methyl- und Et Ethylrest bedeutet.

Obwohl in Formel (I) nicht dargestellt können die erfindungsgemäß eingesetzten Siloxane (A) herstellungsbedingt einen molaren Anteil von Verzweigungen, d.h. T- und/oder Q-Einheiten, also wenn R¹ die Bedeutung von Siloxanylrest annimmt, von bevorzugt bis zu 1%, besonders bevorzugt bis zu 1000 ppm, insbesondere keine, aufweisen.

Bei den erfindungsgemäß eingesetzten Siloxanen (A) handelt es sich bevorzugt um solche, die bei Temperaturen zwischen 10 und 100°C und einem Druck von 1013 hPa flüssig sind, besonders bevorzugt um solche, die zwischen 10 und 50°C und einem Druck von 1013 hPa flüssig sind.

Die erfindungsgemäß eingesetzten Siloxane (A) haben eine Farbzahl APHA bevorzugt unter 100, besonders bevorzugt unter 10.

Die erfindungsgemäß eingesetzten Siloxane (A) können nach in der Siliziumchemie gängigen Verfahren hergestellt werden.

Dabei können die Siloxane (A) herstellungsbedingt im Gemisch mit Verunreinigungen vorliegen, wie z.B. mit amino-oxo-acetatfunktionelle Silanolen. Bevorzugt haben die erfindungsgemäß eingesetzten Siloxane (A) eine Reinheit von 90 Gew.-%, besonders bevorzugt eine Reinheit > 99 Gew.-%, insbesondere eine Reinheit > 99,5 Gew.-%.

Im Rahmen der vorliegenden Erfindung erfolgt die Bestimmung der APHA Zahl gemäß DIN ISO 6271-2 bevorzugt mittels eines LICO 500-Gerätes der Fa. Hach-Lange. Dabei fließt in den APHA-Messwert nicht nur die Farbe ein, sondern zusätzlich auch der Trübungswert des gemessenen Produktes.

Beispiele für erfindungsgemäß eingesetzte Siloxane (B1) sind (HO)Me₂SiO[SiMe₂O]₄₅SiMe₂(OH), (HO)MeViSiO[SiMe₂O]₃₀SiMeVi(OH) und (HO)Me₂SiO[SiMe₂O]₁₅[SiMeVi]₂OSiMe₂(OH), wobei Me Methylrest, Et Ethylrest und Vi Vinylrest bedeutet.

Bevorzugt handelt es sich bei der erfindungsgemäß eingesetzten Komponente (B1) um lineare Siloxane mit aliphatischen Substituenten.

Bevorzugt hat die erfindungsgemäß eingesetzte Komponente (B1), eine Viskosität von 5 bis 10 000 mPas, besonders bevorzugt von 10 bis 400 mPas, ganz besonders bevorzugt von 15 bis 150 mPas jeweils gemessen bei 25°C.

Die Viskositäten werden dabei nach der DIN 53019 bestimmt.

Die erfindungsgemäß eingesetzten Siloxane (B1) können herstellungsbedingt einen molaren Anteil von Verzweigungen, d.h. T-und/oder Q-Einheiten, von bevorzugt bis zu 1%, besonders bevorzugt bis zu 1000 ppm, insbesondere keine, aufweisen.

Des Weiteren können die Siloxane (B1) herstellungsbedingt noch im Gemisch mit Verunreinigungen vorliegen, wie z.B. Wasser. Bevorzugt haben die erfindungsgemäß eingesetzten Siloxane (B1) eine Reinheit von 80 Gew.-%, besonders bevorzugt eine Reinheit > 90 Gew.-%, insbesondere eine Reinheit > 99 Gew.-%.

Bei den Organosiliciumverbindungen (B1) handelt es sich um handelsübliche Produkte bzw. können nach in der Siliciumchemie gängigen Methoden hergestellt werden.

Beispiele für erfindungsgemäß eingesetzte Siloxane (B2) sind Octamethylcyclotetrasiloxan, Hexamethylcyclotrisiloxan, Decamethylcyclopentasilpoxan, Dodecamethylcyclohexasiloxan sowie deren Mischungen.

Bevorzugt handelt es sich bei der erfindungsgemäß eingesetzten Komponente (B2) um Octamethylcyclotetrasiloxan, Hexamethylcyclotrisiloxan und Decamethylcyclopentasilpoxan, besonders bevorzugt um Octamethylcyclotetrasiloxan.

Die erfindungsgemäß eingesetzten Siloxane (B2) können herstellungsbedingt einen molaren Anteil von Verzweigungen, d.h. T-und/oder Q-Einheiten, von bevorzugt bis zu 1%, besonders bevorzugt bis zu 1000 ppm, insbesondere keine, aufweisen.

Bei den Organosiliciumverbindungen (B2) handelt es sich um handelsübliche Produkte bzw. können nach in der Siliciumchemie gängigen Methoden hergestellt werden.

Bei dem erfindungsgemäßen Verfahren werden als Komponente (B) lineare Siloxane (B1), cyclische Verbindungen (B2) oder deren Gemische verwendet werden. Bevorzugt handelt es sich bei Komponente (B) um lineare Siloxane (B1).

Das Masseverhältnis zwischen den Siloxanen (B) und der Komponente (A) kann bei dem erfindungsgemäßen Verfahren in weiten Bereichen variieren und wird in erster Linie durch das gewünschte Molekulargewicht der Verbindungen, die nach dem erfindungsgemäßen Verfahren hergestellt werden sollen, bestimmt.

Bei dem erfindungsgemäßen Verfahren wird Komponente (B) bevorzugt in Mengen von 10 bis 200 Gewichtsteilen, besonders bevorzugt 30 bis 150 Gewichtsteilen, jeweils bezogen auf 1 Gewichtsteil Komponente (A), eingesetzt.

Als Katalysatoren (C) können die gleichen Katalysatoren eingesetzt werden, die in bisher beschriebenen Equilibrierverfahren eingesetzt werden konnten, wie etwa starke Säuren oder starke Basen. Die verwendeten Katalysatoren (C) können bei den Verfahrensbedingungen in fester Form vorliegen oder auch in flüssiger Form.

Bevorzugt handelt es sich bei Katalysatoren (C) um starke Säuren, wie HCl, Schwefelsäure, Sulfonsäuren oder auch Phosphornitrilchloride (PNCl2) oder deren oligomere bzw. polymeren Analoga, oder auch um starke Basen, wie NaOH, KOH, CsOH, RbOH, Ammoniumhydroxide oder auch Phosphazen Basen wie z.B. t-Bu P4-Base (Schwesinger Base).

Bevorzugt handelt es sich bei Katalysatoren (C) um Phosphor-enthaltene Katalysatoren, wie z.B. Phosphazen-Basen oder Phosphornitrilchloride (PNCl2).

Katalysatoren (C) werden in Mengen von bevorzugt 10 bis 10 000 Gewichts-ppm, besonders bevorzugt von 10 bis 2000 Gewichts-ppm, jeweils bezogen auf die Gesamtmenge der Komponenten (A) und (B), eingesetzt.

Nach Beendigung der erfindungsgemäßen Umsetzung können die Katalysatoren (C) abhängig von der Art, Einsatzmenge oder Verwendungszweck des Endproduktes wahlweise in neutralisierter Form oder auch in nicht-neutralisierter Form im Endprodukt verbleiben oder können durch bekannte Methoden, wie z.B. durch Adsorption auf basische Oxide wie Aluminiumoxid, Magnesiumoxid oder basische Salze wie z.B. Carbonate oder Hydrogencarbonate neutralisiert und gegebenenfalls abfiltriert werden.

Das erfindungsgemäße Verfahren kann in Anwesenheit oder in Abwesenheit von Lösungsmitteln (D) durchgeführt werden. Falls Lösungsmittel (D) eingesetzt werden, handelt es sich bevorzugt um aprotische Lösungsmittel, besonders bevorzugt um aprotische Lösungsmittel oder Lösungsmittelgemische mit einem Siedebereich von 80 bis 160° C bei 0,1 MPa. Die Bezeichnung Lösungsmittel bedeutet nicht, dass sich alle Reaktionskomponenten in diesem lösen müssen. Die Anwesenheit von Lösungsmittel (D) kann u.a. dazu dienen, die Viskosität der gewünschten Endprodukte so herabzusetzen, dass diese leichter mit technischen Mitteln gefördert oder gepumpt werden können.

Bevorzugte Beispiele für gegebenenfalls eingesetzte aprotische Lösungsmittel (D) sind aliphatische Kohlenwasserstoffe, wie z.B. Hexan, Heptan oder Decan, aromatische Kohlenwasserstoffe, wie z.B. Toluol oder Xylol, sowie Ether, wie Tetrahydrofuran (THF), Diethylether und Methyl-tert-butylether (MTBE).

Falls bei dem erfindungsgemäßen Verfahren Lösungsmittel (D) eingesetzt werden, sollte bevorzugt die Menge ausreichen, um eine ausreichende Homogenisierung der Reaktionsmischung zu gewährleisten.

Falls bei dem erfindungsgemäßen Verfahren Lösungsmittel (D) eingesetzt werden, handelt es sich um Mengen von bevorzugt 20 bis 80 Gew.-%, besonders bevorzugt 20 bis 50 Gew.-%, jeweils bezogen auf das Gesamtgewicht aller eingesetzten Komponenten. Bei dem erfindungsgemäßen Verfahren werden bevorzugt keine Lösungsmittel (D) eingesetzt.

Bei dem erfindungsgemäßen Verfahren beträgt der Anteil der Komponenten (A) bis (D) an der Gesamtmenge an eingesetzten Stoffen bevorzugt mindestens 90 Gew.-%, besonders bevorzugt mindestens 95 Gew.-%.

Bei dem erfindungsgemäßen Verfahren werden außer den Komponenten (A) bis (D) sowie gegebenenfalls deren herstellungsbedingten Verunreinigungen bevorzugt keine weiteren Bestandteile eingesetzt.

In einer bevorzugten Ausführungsform des erfindungsgemäßen Verfahrens werden (A) Siloxane der Formel (I) mit R¹ gleich Methylrest, R^{x} gleich Wasserstoffatom, m gleich 0 oder eine ganze Zahl von 1 bis 10, Y gleich -C₃H₆- und R² gleich Ethylrest, mit (B1) linearen Siloxanen der Formel (II) mit R gleich Methylrest und t gleich einer ganzen Zahl von 25 bis 40 in Anwesenheit von Katalysator (C) umgesetzt.

In einer weiteren bevorzugten Ausführungsform des erfindungsgemäßen Verfahrens werden (A) Siloxane der Formel (I) mit R¹ gleich Methylrest, R^{x} gleich Wasserstoffatom, m gleich 0 oder eine ganze Zahl von 1 bis 10, Y gleich -C₃H₆- und R² gleich Methylrest, mit (B1) linearen Siloxanen der Formel (II) mit R gleich Methylrest und t gleich einer ganzen Zahl von 25 bis 40 in Anwesenheit von Katalysator (C) umgesetzt.

In einer weiteren bevorzugten Ausführungsform des erfindungsgemäßen Verfahrens werden (A) Siloxane der Formel (I) mit R¹ gleich Methylrest, R^{x} gleich Wasserstoffatom, m gleich 0 oder eine ganze Zahl von 1 bis 10, Y gleich -C₃H₆- und R² gleich Ethylrest, mit (B1) linearen Siloxanen der Formel (II) mit R gleich Methylrest und t gleich einer ganzen Zahl von 100 bis 150 in Anwesenheit von Katalysator (C) umgesetzt.

In einer weiteren bevorzugten Ausführungsform des erfindungsgemäßen Verfahrens werden (A) Siloxane der Formel (I) mit R¹ gleich Methylrest, R^{x} gleich Wasserstoffatom, m gleich 0 oder eine ganze Zahl von 1 bis 10, Y gleich -C₃H₆- und R² gleich Ethylrest, mit einer Mischung aus (B1) linearen Siloxanen der Formel (II) mit R gleich Methylrest und t gleich einer ganzen Zahl von 25 bis 40 und (B2) cyclischen Siloxanen der Formel (III) mir R⁴ gleich Methylrest und s gleich einer ganzen Zahl von 4 bis 6 in Anwesenheit von Katalysator (C) umgesetzt.

Bei den im erfindungsgemäßen Verfahren eingesetzten Komponenten kann es sich jeweils um eine Art einer solchen Komponente wie auch um ein Gemisch aus mindestens zwei Arten einer jeweiligen Komponente handeln.

Bei dem erfindungsgemäßen Verfahren können die eingesetzten Edukte in beliebiger und bisher bekannter Weise miteinander vermischt werden. Die Reihenfolge beim Vermischen der Bestandteile (A), (B), (C) und gegebenenfalls (D) ist zwar nicht entscheidend, für die Praxis hat es sich jedoch bewährt, den Katalysator (C) bevorzugt dem Gemisch der anderen Bestandteile zuletzt zuzusetzen. Dabei kann der Katalysator (C) auch als Vormischung in einem Lösungsmittel (D) oder in einer der Komponente (A) oder (B), bevorzugt in der Komponente (B), zugesetzt werden, insbesondere um die korrekte Dosierung des Katalysators (C) zu erleichtern.

Das erfindungsgemäße Verfahren wird dabei bevorzugt unter Schutzgas, wie z.B. Stickstoff oder Argon, besonders bevorzugt unter Stickstoff, durchgeführt.

Die Wahl eines geeigneten Reaktors zur Durchführung des erfindungsgemäßen Verfahrens wird dabei im Wesentlichen von der Viskosität der verwendeten Edukte und der Viskosität des erwarteten Produktes bestimmt. Es können hierbei neben klassischen Rührkesseln auch bei hochmolekularen Produkten u.a. Kneter zur Durchführung des Verfahrens Verwendung finden.

Das erfindungsgemäße Verfahren wird bei Temperaturen bevorzugt zwischen 0 und 250 °C durchgeführt, besonders bevorzugt zwischen 40 und 150 °C, ganz besonders bevorzugt zwischen 50 und 120 °C. Das erfindungsgemäße Verfahren wird dabei bevorzugt bei Drücken zwischen 1 hPa und 2000 hPa, besonders bevorzugt jedoch bei Drücken zwischen 1 hPa und 1100 hPa, insbesondere zwischen 1 und 100 hPa durchgeführt.

Nach erfolgter Umsetzung wird die so erhaltene Produktmischung auf an sich bekannte Weise aufgearbeitet. Die Entfernung der bei dem erfindungsgemäßen Verfahren gegebenenfalls entstehenden Kondensationsprodukte wie z.B. Wasser oder auch cyclische Siloxane erfolgt bevorzugt bei erhöhter Temperatur und/oder vermindertem Druck.

Bevorzugt sind die in der erfindungsgemäß erhaltenen Produktmischung gegebenenfalls verbleibenden Mengen an cyclischen Siloxanprodukten unter 1 Gew.-%, besonders bevorzugt unter 0,5 Gew.-%, ganz besonders bevorzugt unter 0,1 Gew.-%. Die Entfernung insbesondere der niedermolekularen cyclischen Siloxane der allgemeinen Formel (III) mit n=3 bis 5 kann nach den im Stand der Technik bekannten Temperaturen und Drücken durch eine nachgeschaltete kontinuierliche oder diskontinuierliche Vakuumdestillation erfolgen.

Das erfindungsgemäße Verfahren kann absatzweise, halbkontinuierlich oder vollkontinuierlich durchgeführt werden.

Nach dem erfindunggemäßen Verfahren werden funktionelle Siloxane erhalten, die z.B. zur Beschichtung von Fasern wie Wolle, Baumwolle oder Textilien verwendet werden, oder zur Beschichtung von Lederwaren oder als Schmiermittel im Maschinenbau Verwendung finden können. Zusätzlich können die erfindungsgemäß hergestellten funktionellen Siloxane auch bei der Herstellung von Polymeren oder bei der Modifizierung von Polymeren Verwendung finden.

Die erfindungsgemäß hergestellten Siloxane haben eine Farbzahl APHA von bevorzugt 0 bis 100, besonders bevorzugt von 0 bis 20, ganz besonders bevorzugt von 0 bis 10.

Die erfindungsgemäß hergestellten Siloxane haben ein durchschnittliches Molekulargewicht (Zahlenmittel) von bevorzugt 1000 g/mol bis 100 000 g/mol, besonders bevorzugt von 2500 g/mol bis 50 000 g/mol und ganz besonders bevorzugt von 10 000 bis 45 000 g/mol.

Das durchschnittliche Molekulargewicht (Zahlenmittel) des Endproduktes wird dabei hauptsächlich durch das jeweilige Verhältnis der erfindungsgemäß verwendeten Edukte bestimmt.

Das erfindungsgemäße Verfahren hat den Vorteil, dass es einfach und schnell in der Durchführung ist, wobei einfache Ausgangsprodukte verwendet werden können.

Das erfindungsgemäße Verfahren hat den Vorteil, dass Alkyloxalatoaminoalkyl-funktionelle Siloxane (Oxamid-funktionelle Siloxane) in hoher Reinheit erhalten werden, insbesondere ohne Trübung und ohne Gelbfärbung.

Das erfindungsgemäße Verfahren hat weiterhin den Vorteil, dass hier leicht zugängliche, günstige und leicht zu verarbeitende Edukte verwendet werden können.

In den nachstehend beschriebenen Beispielen beziehen sich alle Angaben von Teilen und Prozentsätzen, falls nicht anders angegeben, auf das Gewicht. Des Weiteren beziehen sich alle Viskositätsangaben auf eine Temperatur von 25°C und eine Schergeschwindigkeit von 1s⁻¹. Sofern nicht anders angegeben, werden die nachstehenden Beispiele bei einem Druck der umgebenden Atmosphäre, also etwa 1010 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

Die nachfolgenden Beispiele werden in Anwesenheit von Stickstoff als Schutzgas durchgeführt.

Bei den in den Beispielen angegebenen Molekulargewichten handelt es sich um zahlengemittelte Molekulargewichte. Die Auswertung des Gehaltes an Nebenprodukten und der durchschnittlichen Molekulargewichte erfolgt per NMR-Spektroskopie. Dabei werden per 29Si-NMR-Spektroskopie die mittlere Kettenlänge, die Rest-Si-OH Gehalte, Cyclengehalte und die Gehalte an dimeren Nebenprodukten bestimmt.

Die Viskositäten wurden gemessen mittels eines Kegel-Platte Viskosimeters der Fa. Anton-Paar.

Me bedeutet Methylrest.

Folgende Edukte werden verwendet:

### Dimer 1:

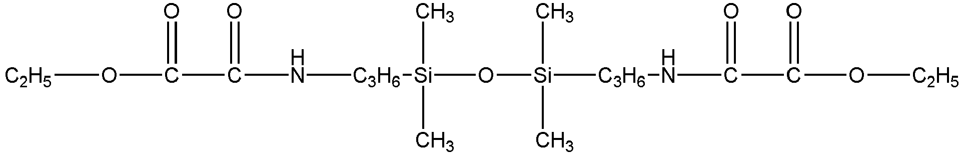

### Dimer 2:

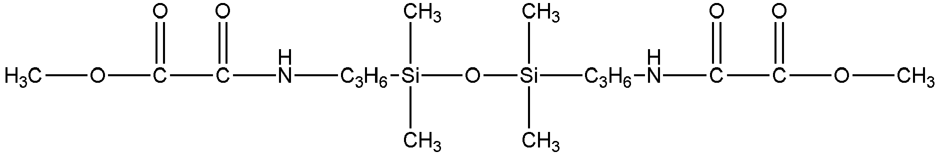

### Siloxan 1:

Bishydroxy-terminiertes Polydimethylsiloxan HO[SiMe₂O]_{32,3}H mit einem mittleren Molekulargewicht von 2408 g/mol und einem Wassergehalt von 370 ppm.

### Siloxan 2:

Bishydroxy-terminiertes Polydimethylsiloxan HO[SiMe₂O]_{10,6}H mit einem mittleren Molekulargewicht von 802 g/mol und einem Wassergehalt von 430 ppm.

### Siloxan 3:

Bishydroxy-terminiertes Polydimethylsiloxan HO[SiMe₂O]_{144,3}H mit einem mittleren Molekulargewicht von 10696 g/mol und einem Wassergehalt von 220 ppm.

### Siloxan 4:

Octamethylcyclotetrasiloxan (SiMe₂O)₄, destilliert, Wassergehalt < 40 ppm.

### Katalysator 1:

(PNCl2)n, 100 %ig, lineares Poly-Phosphornitrilchlorid, CAS Nr: 1832-07-1, erhältlich bei der Fa. Silar, Wilmington NC, USA unter der Produktnummer 1996

### Katalysator 2:

1-*tert*-Butyl-4,4,4-tris (dimethylamino)-2,2-bis[tris(dimethyl-amino)-phosphoranylidenamino]-2λ⁵,4λ⁵-catenadi(phosphazene) P4 - t-Bu Lösung in Hexan (0,8m) (käuflich erhältlich unter der Bezeichnung Phosphazen Base P4-t-Bu-Lösung bei Sigma-Aldrich, München, Deutschland).

### Beispiel 1

500 g Siloxan 1 wurden bei Raumtemperatur mit 15,0 g Dimer 1 und 52 mg Katalysator 1 vermischt. Anschließend wurde bei einem Druck von 4 mbar für 3 h auf 90 °C erhitzt, wobei die Reaktionsmischung nach etwa 1,5 h klar und transparent wurde. Nach den 3 h wurde noch für 30 Minuten auf 100 °C erhitzt, anschließend auf 22 °C abgekühlt und belüftet. Anschließend wurden 1,0 g Magnesiumoxid zugegeben, für 20 Minuten gerührt und das Magnesiumoxid wieder abfiltriert. Man erhielt ein farbloses, klares, transparentes Bis-Ethyloxalatoaminopropyl-funktionelles Silikonöl mit einer APHA Zahl von 3, einer Viskosität von 845 mPas, einem mittleren Molekulargewicht von 15272 g/mol und einem Rest-Si-OH Gehalt von 75 ppm.

### Beispiel 2

500 g Siloxan 2 wurden bei Raumtemperatur mit 15,0 g Dimer 1 und 52 mg Katalysator 1 vermischt. Anschließend wurde bei einem Druck von 4 mbar für 3 h auf 90 °C erhitzt, wobei die Reaktionsmischung nach etwa 1,5 h klar und transparent wurde. Nach den 3 h wurde noch für 30 Minuten auf 100 °C erhitzt, anschließend auf 22 °C abgekühlt und belüftet. Anschließend wurden 1,0 g Magnesiumoxid zugegeben, für 20 Minuten gerührt und das Magnesiumoxid wieder abfiltriert. Man erhielt ein farbloses, klares, transparentes Bis-Ethyloxalatoaminopropyl-funktionelles Silikonöl mit einer APHA Zahl von 2, einer Viskosität von 830 mPas, einem mitteleren Molekulargewicht von 15100 g/mol und einem Rest-Si-OH Gehalt von 105 ppm.

### Beispiel 3

500 g Siloxan 3 wurden bei Raumtemperatur mit 5,0 g Dimer 1 und 60 mg Katalysator 1 vermischt. Anschließend wurde bei einem Druck von 4 mbar für 3 h auf 90 °C erhitzt, wobei die Reaktionsmischung nach etwa 1,5 h klar und transparent wurde. Nach den 3 h wurde noch für 30 Minuten auf 100 °C erhitzt, anschließend auf 22 °C abgekühlt und belüftet. Man erhielt ein farbloses, klares, transparentes Bis-Ethyloxalatoaminopropyl-funktionelles Silikonöl mit einer APHA Zahl von 2, einer Viskosität von 13 Pas, einem mittleren Molekulargewicht von 45100 g/mol und einem Rest-Si-OH Gehalt von 60 ppm.

### Beispiel 4

250 g Siloxan 1 und 250 g Siloxan 4 wurden bei Raumtemperatur mit 15,0 g Dimer 1 und 60 mg Katalysator 1 vermischt. Anschließend wurde für 6 h auf 90 °C erhitzt, wobei die Reaktionsmischung nach etwa 4 h klar und transparent wurde. Nach den 6 h wurde noch für 180 Minuten bei einem Druck von 4 mbar auf 130°C erhitzt, anschließend auf 22 °C abgekühlt und belüftet. Anschließend wurden 1,0 g Magnesiumoxid zugegeben, für 20 Minuten gerührt und das Magnesiumoxid wieder abfiltriert. Man erhielt ein farbloses, klares, transparentes Bis-Ethyloxalatoaminopropyl-funktionelles Silikonöl mit einer APHA Zahl von 4, einer Viskosität von 780 mPas, einem mittleren Molekulargewicht von 14760 g/mol und einem Rest-Si-OH Gehalt von 45 ppm. Der Gehalt an verbleibenden Siloxan-Cyclen war unter 1000 ppm.

### Beispiel 5

500 g Siloxan 1 wurden bei Raumtemperatur mit 15,0 g Dimer 2 und 52 mg Katalysator 1 vermischt. Anschließend wurde bei einem Druck von 4 mbar für 3 h auf 90 °C erhitzt, wobei die Reaktionsmischung nach etwa 1,5 h klar und transparent wurde. Nach den 3 h wurde noch für 30 Minuten auf 100 °C erhitzt, anschließend auf 22 °C abgekühlt und belüftet. Anschließend wurden 1,0 g Magnesiumoxid zugegeben, für 20 Minuten gerührt und das Magnesiumoxid wieder abfiltriert. Man erhielt ein farbloses, klares, transparentes Bis-Methyloxalatoaminopropyl-funktionelles Silikonöl mit einer APHA Zahl von 3, einer Viskosität von 720 mPas, einem mittleren Molekulargewicht von 14310 g/mol und einem Rest-Si-OH Gehalt von 65 ppm.

### Beispiel 6

500 g Siloxan 1 wurden bei Raumtemperatur mit 15,0 g Dimer 1 und 200 µl Katalysator 2 vermischt. Anschließend wurde bei einem Druck 4 mbar für 5 h auf 90 °C erhitzt, wobei die Reaktionsmischung nach etwa 2,0 h klar und transparent wurde. Nach den 3 h wurde noch für 30 Minuten auf 100 °C erhitzt, anschließend auf 22 °C abgekühlt und belüftet. Man erhielt ein farbloses, klares, transparentes Bis-Ethyloxalatoaminopropyl-funktionelles Silikonöl mit einer APHA Zahl von 2, einer Viskosität von 860 mPas, einem mittleren Molekulargewicht von 15440 g/mol und einem Rest-Si-OH Gehalt von 90 ppm.

### Beispiel 7

1500 g Siloxan 3 wurden bei Raumtemperatur mit 10,0 g Dimer 1 und 150 mg Katalysator 1 vermischt. Anschließend wurde bei einem Druck von 2 mbar für 6 h auf 130 °C erhitzt, wobei die Reaktionsmischung nach etwa 1,5 h klar wurde. Anschließend wurde unter reduziertem Druck von 2 hPa auf 22 °C abgekühlt und belüftet. Man erhielt ein farbloses, transparentes Bis-Oxamidfunktionelles Silikonöl mit einer APHA Zahl von 6, einer Viskosität von 19 Pas, einem mittleren Molekulargewicht von 71400 g/mol und einem Rest-Si-OH Gehalt von 70 ppm.

## Patentansprüche

1. Verfahren zur Herstellung von amino-oxo-acetat-funktionellen Organosiloxanen durch Umsetzung von
(A) Siloxanen der allgemeinen Formel (I) 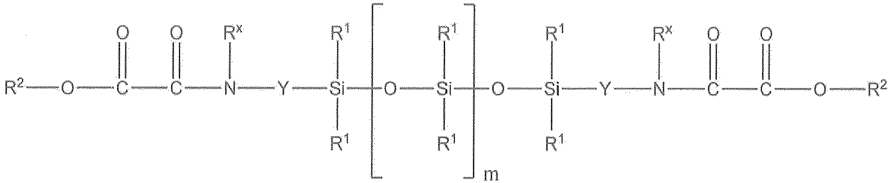 mit
(B) Siloxanen ausgewählt aus
(B1) linearen Siloxanen der allgemeinen Formel
HO[SiR₂O]ₜH (II)
und
(B2) cyclischen Verbindungen der allgemeinen Formel
(SiR⁴₂O)ₛ (III),
wobei
R gleich oder verschieden sein kann und Wasserstoffatom oder einwertige, gegebenenfalls substituierte, SiC-gebundene Kohlenwasserstoffreste bedeutet, welche durch Heteroatome unterbrochen sein können,
R¹ gleich oder verschieden sein kann und einwertige, gegebenenfalls substituierte, SiC-gebundene Kohlenwasserstoffreste bedeutet, welche durch Heteroatome unterbrochen sein können,
Y gleich oder verschieden sein kann und zweiwertige, gegebenenfalls substituierte Kohlenwasserstoffreste darstellt, die durch Sauerstoffatome unterbrochen sein können,
R² gleich oder verschieden sein kann und Wasserstoffatom, monovalente, gegebenenfalls substituierte Kohlenwasserstoff reste bedeutet, die durch Sauerstoffatome unterbrochen sein können,
R⁴ gleich oder verschieden sein kann und Wasserstoffatom, Si-gebundenes Halogenatom, Si-gebundene Hydroxygruppe oder einwertige, gegebenenfalls substituierte, SiC-gebundene Kohlenwasserstoffreste bedeutet, welche durch Heteroatome unterbrochen sein können,
R^{x} gleich oder verschieden sein kann und Wasserstoffatom oder gegebenenfalls substituierte Kohlenwasserstoffreste bedeutet,
m 0 oder eine ganze Zahl ist,
s eine ganze Zahl von 3 bis 10 ist und
t eine ganze Zahl größer 1 bedeutet,
in Gegenwart von
(C) Katalysatoren.

2. Verfahren gemäß Anspruch 1, **dadurch gekennzeichnet, dass** es sich bei Komponente (B) um lineare Siloxane (B1) handelt.

3. Verfahren gemäß Anspruch 1 oder 2, **dadurch gekennzeichnet, dass** Komponente (B) in Mengen von 10 bis 200 Gewichtsteilen, bezogen auf 1 Gewichtsteil Komponente (A), eingesetzt wird.

4. Verfahren gemäß einem oder mehreren der Ansprüche 1 bis 3, **dadurch gekennzeichnet, dass** es sich bei Katalysatoren (C) um Phosphor-enthaltene Katalysatoren handelt.

5. Verfahren gemäß einem oder mehreren der Ansprüche 1 bis 4, **dadurch gekennzeichnet, dass** Katalysatoren (C) in Mengen von 10 bis 10 000 Gewichts-ppm, bezogen auf die Gesamtmenge der Komponenten (A) und (B), eingesetzt werden.

6. Verfahren gemäß einem oder mehreren der Ansprüche 1 bis 5, **dadurch gekennzeichnet, dass** es unter Schutzgas durchgeführt wird.

7. Verfahren gemäß einem oder mehreren der Ansprüche 1 bis 6, **dadurch gekennzeichnet, dass** es bei Temperaturen zwischen 0 und 250 °C durchgeführt wird.

8. Verfahren gemäß einem oder mehreren der Ansprüche 1 bis 7, **dadurch gekennzeichnet, dass** es bei Drücken zwischen 1 hPa und 2000 hPa durchgeführt wird.

9. Verfahren gemäß einem oder mehreren der Ansprüche 1 bis 8, **dadurch gekennzeichnet, dass** die hergestellten Siloxane ein durchschnittliches Molekulargewicht (Zahlenmittel) von 1000 g/mol bis 100 000 g/mol, wie per NMR-Spektroscopie bestimmt, haben.

## Claims

1. Process for producing amino-oxo-acetate-functional organosiloxanes by reacting
(A) siloxanes of the general formula (I) 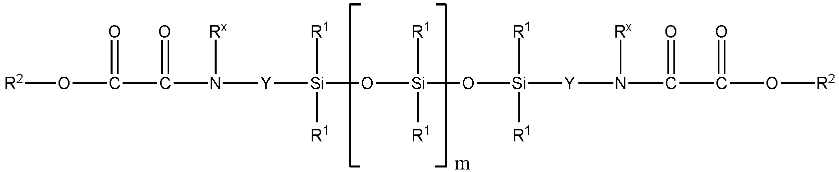 with
(B) siloxanes selected from
(B1) linear siloxanes of the general formula
HO[SiR₂O]ₜH (II)
and
(B2) cyclic compounds of the general formula
(SiR⁴₂O)ₛ (III),
where
**R** may be the same or different and denotes a hydrogen atom or monovalent, optionally substituted, SiC-bonded hydrocarbon radicals, which may be interrupted by heteroatoms,
**R¹** may be the same or different and denotes monovalent, optionally substituted, SiC-bonded hydrocarbon radicals, which may be interrupted by heteroatoms,
**Y** may be the same or different and represents divalent, optionally substituted hydorcarbon radicals, which may be interrupted by oxygen atoms,
**R²** may be the same or different and denotes a hydrogen atom, monovalent, optionally substituted hydrocarbon radicals, which may be interrupted by oxygen atoms,
**R⁴** may be the same or different and denotes a hydrogen atom, Si-bonded halogen atom, Si-bonded hydroxyl group or monovalent, optionally substituted, SiC-bonded hydrocarbon radicals, which may be interrupted by heteroatoms,
**R^{x}** may be the same or different and signifies a hydrogen atom or optionally substituted hydrocarbon radicals,
m is 0 or an integer,
s is an integer from 3 to 10 and
t signifies an integer greater than 1,
in the presence of
(C) catalysts.

2. Process according to Claim 1, **characterized in that** component (B) is linear siloxanes (B1).

3. Process according to Claim 1 or 2, **characterized in that** component (B) is used in amounts from 10 to 200 parts by weight, based on 1 part by weight of component (A).

4. Process according to one or more of Claims 1 to 3, **characterized in that** catalysts (C) are phosphorus-containing catalysts.

5. Process according to one or more of Claims 1 to 4, **characterized in that** catalysts (C) are used in amounts from 10 to 10 000 ppm by weight, based on the total amount of components (A) and (B).

6. Process according to one or more of Claims 1 to 5, **characterized in that** said process is carried out under protective gas.

7. Process according to one or more of Claims 1 to 6, **characterized in that** said process is carried out at temperatures between 0 and 250°C.

8. Process according to one or more of Claims 1 to 7, **characterized in that** said process is carried out at pressures between 1 hPa and 2000 hPa.

9. Process according to one or more of Claims 1 to 8, **characterized in that** the siloxanes produced have an average molecular weight (number average) of 1000 g/mol to 100 000 g/mol, as determined by NMR spectroscopy.

## Revendications

1. Procédé de fabrication d'organosiloxanes à fonction amino-oxo-acétate par mise en réaction de :
(A) des siloxanes de formule générale (I) 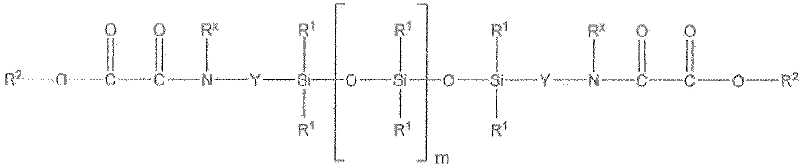 avec
(B) des siloxanes choisis parmi :
(B1) les siloxanes linéaires de formule générale :
HO[SiR₂O]ₜH (II)
et
(B2) les composés cycliques de formule générale :
(SiR⁴₂O)ₛ (III)
dans lesquelles
les **R** peuvent être identiques ou différents, et signifient un atome d'hydrogène ou des radicaux hydrocarbonés monovalents, éventuellement substitués, reliés à SiC, qui peuvent être interrompus par des hétéroatomes,
les **R¹** peuvent être identiques ou différents, et signifient des radicaux hydrocarbonés monovalents, éventuellement substitués, reliés à SiC, qui peuvent être interrompus par des hétéroatomes,
les **Y** peuvent être identiques ou différents, et signifient des radicaux hydrocarbonés bivalents, éventuellement substitués, qui peuvent être interrompus par des atomes d'oxygène,
les **R²** peuvent être identiques ou différents, et signifient un atome d'hydrogène, des radicaux hydrocarbonés monovalents, éventuellement substitués, qui peuvent être interrompus par des atomes d'oxygène,
les **R⁴** peuvent être identiques ou différents, et signifient un atome d'hydrogène, un atome d'halogène relié à Si, un groupe hydroxy relié à Si ou des radicaux hydrocarbonés monovalents, éventuellement substitués, reliés à SiC, qui peuvent être interrompus par des hétéroatomes,
les **R^{x}** peuvent être identiques ou différents, et signifient un atome d'hydrogène ou des radicaux hydrocarbonés éventuellement substitués,
m signifie 0 ou un nombre entier,
s signifie un nombre entier de 3 à 10, et
t signifie un nombre entier supérieur à 1,
en présence de
(C) des catalyseurs.

2. Procédé selon la revendication 1, **caractérisé en ce que** le composant (B) consiste en des siloxanes linéaires (B1).

3. Procédé selon la revendication 1 ou 2, **caractérisé en ce que** le composant (B) est utilisé en quantités de 10 à 200 parties en poids, par rapport à 1 partie en poids du composant (A).

4. Procédé selon une ou plusieurs des revendications 1 à 3, **caractérisé en ce que** les catalyseurs (C) consistent en des catalyseurs contenant du phosphore.

5. Procédé selon une ou plusieurs des revendications 1 à 4, **caractérisé en ce que** les catalyseurs (C) sont utilisés en quantités de 10 à 10 000 ppm en poids, par rapport à la quantité totale des composants (A) et (B).

6. Procédé selon une ou plusieurs des revendications 1 à 5, **caractérisé en ce qu'**il est réalisé sous un gaz protecteur.

7. Procédé selon une ou plusieurs des revendications 1 à 6, **caractérisé en ce qu'**il est réalisé à des températures comprises entre 0 et 250 °C.

8. Procédé selon une ou plusieurs des revendications 1 à 7, **caractérisé en ce qu'**il est réalisé à des pressions comprises entre 1 hPa et 2 000 hPa.

9. Procédé selon une ou plusieurs des revendications 1 à 8, **caractérisé en ce que** les siloxanes fabriqués présentent un poids moléculaire moyen (moyenne en nombre) de 1 000 g/mol à 100 000 g/mol, tel que déterminé par spectroscopie RMN.
